# EUROPÄISCHE PATENTSCHRIFT

(11) **EP 0 950 875 B1**
(45) Veröffentlichungstag und Bekanntmachung des Hinweises auf die Patenterteilung: **23.07.2003**
(21) Anmeldenummer: 99106187.0
(22) Anmeldetag: 09.04.1999
(51) Int. Cl.: G01D 3/02, G01D 21/02

(54) **Vorrichtung zum Messen von mechanischen Bewegungen**
Device for measuring mechanical movements
Dispositif de mésure de mouvements méchaniques

(30) Priorität: 14.04.1998 DE 19816471
(43) Veröffentlichungstag der Anmeldung: 20.10.1999
(73) Patentinhaber: Drehmo GmbH, 57482 Wenden (DE)
(72) Erfinder: Pedron, Lothar, 57482 Wenden (DE)
(74) Vertreter: Klingseisen, Franz, Dipl.-Ing.

(56) Entgegenhaltungen:
- EP-A- 0 254 142
- GB-A- 2 183 342
- US-A- 3 944 798
- US-A- 5 457 371

## Beschreibung

Die Erfindung betrifft eine Vorrichtung zum Messen von mechanischen Bewegungen, insbesondere Drehbewegungen, wobei die Vorrichtung besonders für Weg- und Drehmomentsensoren beispielsweise für Stellantriebe geeignet ist.
US-A-3 944 798 offenbart eine Vorrichtung zum Messen von geometrischen Werten, insbesondere von Winkeln. Hierzu sind fünf geradlinige Verbindungsglieder gelenkig miteinander verbunden, wobei eines der Endglieder fest angeordnet ist und das andere mit einem Fühler versehen ist. In den Schwenkachsen der Gelenke sind Winkelmeßeinrichtungen vorgesehen. Ein Multiplexer verarbeitet die von den Winkelmessern abgegebenen Signale sequentiell. Im Betrieb dieser bekannten Vorrichtung kann ein Gegenstand im Raum abgetastet werden, und die Winkel des Gegenstandes erfasst werden.
EP-A- 0 254 142 beschreibt ein adressierbares Schalterfeld zur Messung von ein oder mehreren physikalischen Größen

Elektrische Stellantriebe müssen bei Erreichen von Weg- und/-oder Drehmomentgrenzwerten abgeschaltet werden, um Beschädigungen zu vermeiden. Es ist bekannt, zu diesem Zweck mechanische Vorrichtungen, wie bspw. Untersetzungsgetriebe in den Stellantrieb einzubauen, die bei Erreichen von Weg- oder Drehmomentendwerten Endlagerschalter betätigen.

Zur kontinuierlichen Meldung von Wegzwischenstellungen werden auch analoge Potentiometer oder andere Wegsensoren, wie bspw. Drehweggeber in Stellantrieben eingebaut, die Dreh-, Schwenkoder Schubbewegungen aufnehmen und durch Abgabe von elektrischen Signalen melden.

Um Weg- und Drehmomentinformationen an einem Stellantrieb für diagnostische Aussagen über den mechanischen Zustand des Antriebs oder einer nachgestalteten Armatur zu gewinnen, wird jeweils ein Wegsensor und ein Drehmomentsensor vorgesehen. Die Verwendung zweier unabhängiger Sensoren stellt einen gewissen Kostenaufwand dar und erfordert auch zusätzlichen Einbauplatz.

Der Erfindung liegt die Aufgabe zugrunde, eine Vorrichtung zum Messen von mechanischen Bewegungen vorzuschlagen, die bei einfachem und platzsparendem Aufbau die Messung von wenigstens zwei mechanischen Bewegungen, insbesondere Drehbewegungen zuläßt, so daß der Kostenaufwand beispielsweise für einen Wegund Drehmomentsensor verringert werden kann.

Diese Aufgabe wird erfindungsgemäß durch die Merkmale des Patentanspruchs 1 gelöst. Dadurch, daß ein adressierbares Schalterfeld vorgesehen wird, wobei Schalter des Schalterfeldes einerseits mit elektromechanischen Umsetzern verbunden sind, welche an wenigstens zwei mechanischen Eingängen abgenommene mechanische Bewegungen in elektrische Signale umsetzen, sowie andererseits über eine gemeinsame Leitung mit einem gemeinsamen Ausgang verbunden sind, kann über ein Adressignal das dem jeweiligen Schalter zugeführte elektrische Meßsignal abgerufen und an dem gemeinsamen Ausgang zur Verfügung gestellt werden, so daß in einer solchen Vorrichtung beispielsweise Weg- und Drehmomentmeßwerte abgenommen werden können, ohne daß es zweier getrennter Sensoren bedarf. Hierdurch wird eine wesentliche Kosteneinsparung gegenüber zwei Einzelsensoren erzielt und auch der Platzaufwand für einen solchen kombinierten Weg- und Drehmomentsensor wird gegenüber zwei Einzelsensoren beträchtlich reduziert.

Die Erfindung wird beispielsweise anhand der Zeichnung näher erläutert. Es zeigen
- Fig. 1: in schematischer Darstellung den Aufbau einer Vorrichtung zum Messen von zwei mechanischen Drehbewegungen,
- Fig. 2: in einer Draufsicht eine Getriebeplatine eines Sensorgerätes mit zwei voneinander getrennten mechanischen Eingängen, und
- Fig. 3: eine Seitenansicht des Sensorgerätes von Fig. 2.

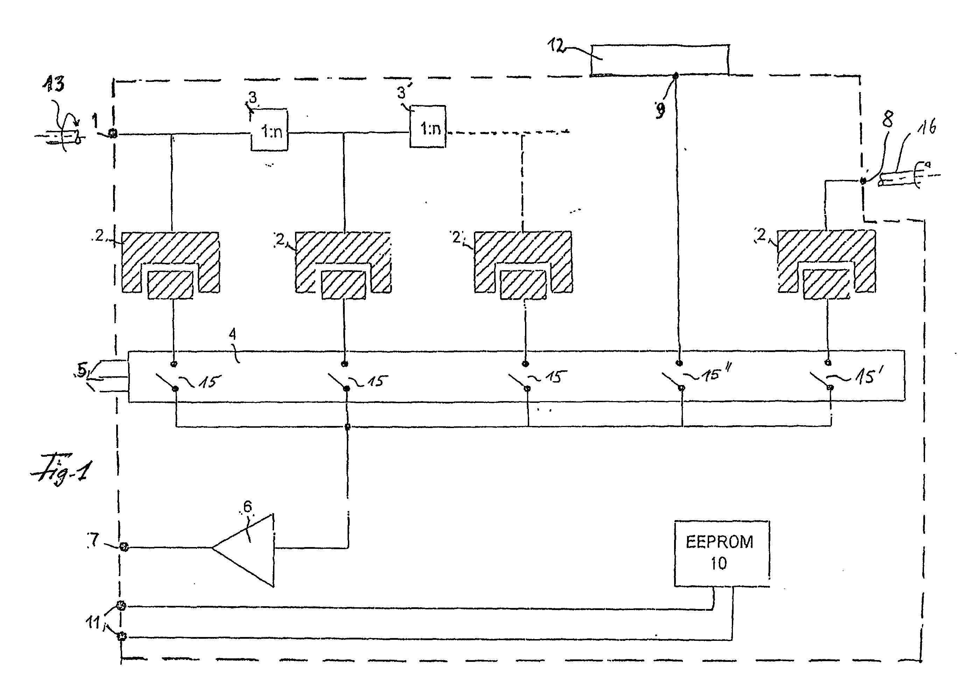

Die in Fig. 1 schematisch wiedergegebene Vorrichtung wird im wesentlichen durch die gestrichelten Linien begrenzt. Bei 1 ist ein mechanischer Eingang angedeutet, der einer umlaufenden Welle 13 entspricht. Die am Eingang 1 abgenommene Drehbewegung wird über einen elektromechanischen Umsetzer 2 in ein elektrisches Signal umgesetzt, das dem Drehwinkel der Welle 13 entspricht. Der elektromechanische Umsetzer 2 kann beispielsweise als Hallsensor oder als ein mit Lichtschranken bzw. optischer Codierung arbeitender Sensor ausgebildet sein.

Bei 3 und 3' sind ein- oder mehrstufige Untersetzungsgetriebe mit 1:n angedeutet, durch die die Drehbewegung der Welle 13 entsprechend dem jeweiligen Untersetzungsverhältnis untersetzt wird, wobei die Drehbewegung der jeweiligen Ausgangswelle der Untersetzungsgetriebe 3, 3' abgenommen und jeweils durch einen elektromechanischen Umsetzer 2 in ein elektrisches Signal umgesetzt wird, das dem Drehwinkel der Welle entspricht. Auf diese Weise kann die Drehbewegung der Welle 13 in kleiner werdenden Schritten festgestellt werden.

Die von den Umsetzern 2 abgegebenen Signale werden auf ein adressierbares Schalterfeld 4 gegeben, das vorzugsweise als Multiplexer ausgebildet sein kann. Bei 5 sind Adresseingänge für ein digitales Adressignal angedeutet, mittels denen die jeweiligen Schalter 15 des Schalterfeldes 4 einzeln angesteuert werden können. Die einzelnen Schalter 15 sind über eine gemeinsame Leitung mit einem Verstärker 6 verbunden, der bei 7 ein elektrisches Ausgangssignal zur Verfügung stellt. Damit kann jeweils eines der von den Umsetzern 2 kommenden Eingangssignale durch entsprechende Adressierung des zugeordneten Schalters 15 an den Verstärker 6 und den Ausgang 7 weitergegeben werden.

Bei einer derartigen Vorrichtung, die mehrere Schalter 15 auf dem adressierbaren Schalterfeld 4 aufweist, wird ein zweiter mechanischer Eingang bei 8 vorgesehen, der die Drehbewegung einer weiteren Welle 16 aufnimmt, wobei die Drehbewegung dieser Welle 16 über einen Umsetzer 2 wieder in ein elektrisches Signal umgesetzt wird, das an den zugeordneten Schalter 15' des adressierbaren Schalterfeldes 4 gegeben wird. Damit steht durch Ansteuerung des Schalters 15' über den Adressein-gang 5. auch das vom mechanischen Eingang 8 abgenommene Signal am Verstärker 6 zur Verfügung.

Die beiden mechanischen Eingänge 1 und 8 sind völlig unabhängig voneinander, wobei bei dem Ausführungsbeispiel in Fig. 1 zwischen dem mechanischen Eingang 8 und dem zugeordneten Umsetzer 2 kein Untersetzungsgetriebe wiedergegeben ist, so daß der Umsetzer 2 die Drehbewegung der Welle 16 direkt in elektrische Signale umsetzt.

Vom Eingang 1 kann z. B. eine Weginformation erhalten werden, die der gemessenen Drehbewegung entspricht, wobei die Welle 13 z. B. mit der Welle eines Stellantriebs verbunden ist und aus deren Drehbewegung bzw. aus der Anzahl der Drehungen eine Weginformation erhalten wird. Die mit dem zweiten mechanischen Eingang 8 verbundene Welle 16 kann beispielsweise mit einem Bauteil verbunden sein, das in Abhängigkeit von einem zu messenden Drehmoment über eine mechanische Vorrichtung in eine Drehbewegung versetzt wird. Beim Stand der Technik wird diese Drehbewegung z. B. durch ein Potentiometer gemessen. Anstelle eines Potentiometers wird die Drehbewegung über den mechanischen Eingang 8 gemessen. Durch entsprechende Adressierung am Adresseingang 5 können am Ausgang 7 sowohl Weg- als auch Drehmomentwerte bzw. -informationen abgenommen werden, ohne daß zwei gesonderte Sensoren vorgesehen werden.

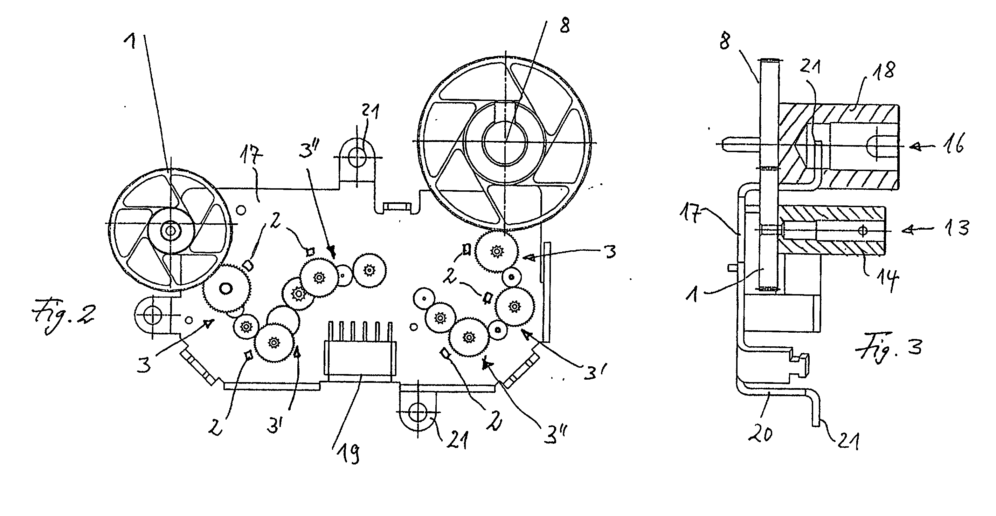

Fig. 2 zeigt in einer Draufsicht ein Sensorgerät entsprechend der in Fig. 1 nur schematisch wiedergegebenen Vorrichtung. Der mechanische Eingang 1 ist durch ein Zahnrad wiedergegeben, das auf einer Platine 17 drehbar gelagert ist. An dem Zahnrad 1 ist eine Nabe 14 angebracht, in deren Bohrung die in Fig. 1 wiedergegebene Welle 13 drehfest eingesetzt wird. Mit dem Zahnrad 1 sind Untersetzungsgetriebe 3, 3' und 3" verbunden, die auf der Platine 17 gelagert sind und den in Fig. 1 schematisch wiedergegebenen Getriebeeinheiten 3 und 3' entsprechen.

Durch diese Untersetzungsgetriebe wird die Eingangsdrehbewegung des Zahnrads 1 stufenweise in kleiner werdende Schritte unterteilt. An den Eingangszahnrädern jedes einzelnen Untersetzungsgetriebes 3 ist ein Umsetzer z. B. ein mit einer Permanentmagnetscheibe auf dem Zahnrad zusammenwirkender Hallsensor 2 angeordnet entsprechend den in Fig. 1 schematisch wiedergegebenen Umsetzern 2, die eine Drehbewegung in elektrische Signale umsetzen.

Der zweite mechanische Eingang 8 ist durch ein weiteres, z. B. größeres Zahnrad in Fig. 2 wiedergegeben, das ebenfalls mit einer Nabe 18 versehen ist, in deren Bohrung die in Fig. 1 wiedergegebene Welle 16 drehfest eingesetzt wird. Das Zahnrad 8 ist ebenfalls auf der Platine 17 drehbar gelagert und es steht mit einem Untersetzungsgetriebe 3 in Eingriff, an das sich weitere Untersetzungsgetriebe 3' und 3" zur Unterteilung der Drehbewegung anschließen. Auch bei diesen Getriebeeinheiten ist jeweils an einem Zahnrad jedes Untersetzungsgetriebes ein Umsetzer 2 beispielsweise in der Form eines Hallsensors vorgesehen.

In der Seitenansicht der Fig. 3 sind die einzelnen Untersetzungsgetriebe 3 nicht wiedergegeben. Ebenso zeigt die Draufsicht in Fig. 2 nicht im einzelnen die elektrische Verbindung zwischen den Umsetzern 2 und dem adressierbaren Schalterfeld 4. Die elektronischen Bauteile einschließlich adressierbarem Schalterfeld 4 und Verstärker 6 sind in einem Bauteil 19 auf der Platine 17 untergebracht, an dem auch die Adresseingänge 5 und der Ausgang 7 in Form einer elektrischen Steckverbindung vorgesehen sind.

Die Platine 17 ist in Fig. 3 mit teilweise aufgebogenen Rändern 20 versehen, wobei an gegenüberliegenden aufgebogenen Rändern 20 eine mit einer Bohrung versehene Lasche 21 abgewinkelt ist. Auf den Laschen 21 wird ein plattenförmiger Deckel beispielsweise aufgeschraubt, um die Getriebeeinheiten 3 abzudecken.

In Fig. 1 ist bei 9 ein Anschluß wiedergegeben, über den direkt elektrische Signale an den Multiplexer bzw. das Schalterfeld 4 und den zugeordneten Schalter 15" eingegeben werden können. Beispielsweise kann bei 12 ein Trimmpotentiometer vorgesehen werden, das an der Platine 17 angebaut sein kann, wobei der Schalter 15" wieder über den Adresseingang 5 zur Signalabgabe am Verstärker 6 und am Ausgang 7 angesteuert werden kann. Das Trimmpotentiometer 12 kann als analoger Datenspeicher verwendet werden, mittels dem Grenzwerte direkt -in der Vorrichtung gespeichert werden können. Damit bildet das Sensorgerät in Fig. 2 und 3 mit Trimmpotentiometer 12 ein einheitliches Bauelement, das ausgetauscht werden kann, ohne daß weitere Einstellungen für die Weg- und Drehmomentmessung vorgenommen werden müssen, nachdem die entsprechenden Grenzwerte und dgl. bereits in dem Sensorgerät vorgegeben sind.

In Fig. 1 ist bei dem dargestellten Ausführungsbeispiel ferner ein nicht flüchtiger digitaler Speicher 10 vorgesehen, der über eine digitale Schnittstelle 11 ansprechbar ist und in dem Konfigurations- und Parametrierdaten hinterlegt werden können. Auch können Weg- oder Drehmomentgrenzwerte und sonstige Vergleichswerte für die zu messenden Größen in dem Speicher 10 gespeichert werden, so daß das Sensorgerät als autonomer Sensor einsetzbar ist, der im Reparaturfall trotz informationstechnischer Verknüpfung unabhängig von anderen Betriebsmitteln ausgetauscht werden kann. Der Speicher 10 kann in dem Bauteil 19 in Fig. 2 untergebracht werden.

Die beschriebene Vorrichtung eignet sich insbesondere für einen kombinierten Weg- und Drehmomentsensor für Stellantriebe und dergleichen. Es ist aber auch möglich, die Vorrichtung für andere Meßzwecke einzusetzen, bei denen wenigstens zwei voneinander getrennte mechanische Bewegungen, insbesondere Drehbewegungen, abgenommen und in Form von elektrischen Signalen verarbeitet werden. Wenn mehrere voneinander getrennte mechanische Bewegungen durch das Sensorgerät überwacht werden sollen, werden zusätzliche Eingangszahnräder entsprechend den Zahnrädern 1 und 8 vorgesehen, wobei die Platine 17 eine beliebige Gestaltung zuläßt, so daß auf dem Umfang der Platte mehrere Eingangszahnräder vorgesehen werden können. Es sind weitere Abwandlungen der beschriebenen Bauform möglich. So können beispielsweise die Untersetzungsgetriebeeinheiten 3, 3' entfallen, so daß nur mechanische Bewegungen an den mechanischen Eingängen 1 und 8 abgenommen und in Form elektrischer Signale auf das Schalterfeld 4 gelegt werden. Weiterhin ist es möglich, weitere Speicherelemente oder andere elektronische Bauteile, die für die Signalverarbeitung eingesetzt werden können, an dem Sensorgerät bzw. auf der Platine 17 vorzusehen.

## Patentansprüche

1. Vorrichtung zum gemeinsamen Messen eines Weges und eines Drehmomentes von zwei voneinander unabhängigen mechanischen Bewegungen, insbesondere Drehbewegungen, umfassend
ein adressierbares Schalterfeld (4), wobei Schalter (15) des Schalterfeldes einerseits mit elektromechanischen Umsetzern (2) verbunden sind, welche an wenigstens zwei mechanischen Eingängen (1,8) abgenommene mechanische Bewegungen in ein elektrisches Wegsignal und ein elektrisches Drehmomentsignal umsetzen, sowie andererseits über eine gemeinsame Leitung mit einem gemeinsamen Ausgang (7) verbunden sind, wobei die einzelnen Schalter (15) des Schalterfeldes (4) über einen Adresseingang (5) getrennt betätigbar sind, um das der Adresse zugeordnete Wegsignal oder Drehmomentsignal an dem gemeinsamen Ausgang (7) zur Verfügung zu stellen.

2. Vorrichtung nach Anspruch 1,
wobei wenigstens ein mechanischer Eingang (1) mit nachgeschalteten internen Getriebeeinheiten (3) verbunden ist, deren Drehbewegung jeweils über einen Umsetzer (2) in ein elektrisches Signal umgesetzt und an das Schalterfeld (4) weitergegeben wird.

3. Vorrichtung nach Anspruch 1 oder 2,
wobei die elektromechanischen Umsetzer (2) als Hallsensoren ausgebildet sind, die mit Dauermagneten an einem sich drehenden Teil zusammenwirken.

4. Vorrichtung nach Anspruch 1 oder 2,
wobei die elektromechanischen Umsetzer (2) mit Lichtschranken bzw. optischer Kodierung arbeiten.

5. Vorrichtung nach einem der vorhergehenden Ansprüche,
wobei das adressierbare Schalterfeld (4) mit einem Anschluß (9) zur direkten Einspeisung eines elektrischen Signals an einen adressierbaren Schalter (15") versehen ist.

6. Vorrichtung nach Anspruch 5,
wobei ein Trimmpotentiometer (21) zur Einspeisung eines elektrischen Signals an das adressierbare Schalterfeld (4) vorgesehen ist.

7. Vorrichtung nach einem der vorhergehenden Ansprüche, wobei ein nicht flüchtiger, digitaler Speicher (10) zur Speicherung von Grenzwertdaten und dgl. vorgesehen ist.

8. Vorrichtung nach einem der vorhergehenden Ansprüche, wobei das Schalterfeld (4) als Multiplexer ausgebildet ist.

9. Vorrichtung nach den vorhergehenden Ansprüchen, wobei auf einem plattenförmigen Bauteil (17) Eingangszahnräder (1, 8) drehbar gelagert sind, die mit Wellen (13, 16) verbindbar sind und mit Untersetzungsgetrieben (3) in Eingriff stehen, auf deren Zahnrädern elektromechanische Umsetzer (2) angebracht sind, die elektrische Signale an ein in einem Bauteil (19) untergebrachtes adressierbares Schalterfeld (4) weitergeben, wobei das Bauteil (19) als Steckverbindung auf dem plattenförmigen Bauteil 17 ausgebildet ist.

10. Verwendung der Vorrichtung nach einem der Ansprüche 1 bis 9 für die kombinierte Weg- und Drehmomentmessung an Stellantrieben.

## Claims

1. Device for combined measuring of a path and of a torque of two mutually independent mechanical movements, especially revolutions, comprising
an addressable switch panel (4), wherein switches (15) of the switch panel on the one hand are connected to electromechanical converters (2) which, at at least two mechanical entrances (1, 8), convert accepted mechanical movements into an electrical path signal and an electrical torque signal, and on the other hand are connected via a common lead to a common exit (7), wherein the individual switches (15) of the switch panel (4) can be separately actuated by means of an address entrance (5), to make available at the common exit (7) the path signal or torque signal allocated to the address.

2. Device according to claim 1,
wherein at least one mechanical entrance (1) is joined to internal gear units (3) which are connected in series and each of whose revolutions is converted by a converter (2) into an electrical signal and transmitted to the switch panel (4).

3. Device according to claim 1 or 2,
wherein the electromechanical converters (2) are formed as Hall sensors which cooperate with permanent magnets at a rotating part.

4. Device according to claim 1 or 2,
wherein the electromechanical converters (2) operate with light barriers or optical coding.

5. Device according to one of the preceding claims,
wherein the addressable switch panel (4) is provided with an extension (9) for direct inputting of an electrical signal to an addressable switch (15").

6. Device according to claim 5,
wherein a trimming potentiometer (21) is provided for inputting an electrical signal to the addressable switch panel (4).

7. Device according to one of the preceding claims, wherein a non-volatile, digital memory (10) is provided for storing limit data and the like.

8. Device according to one of the preceding claims, wherein the switch panel (4) is formed as a multiplexer.

9. Device according to the preceding claims wherein, on a plate-shaped component (17), entrance gearwheels (1, 8) are rotatably supported, which are joinable to shafts (13, 16) and engaged with reducing gears (3) on whose gearwheels electromechanical converters (2) are mounted, which transmit electrical signals to an addressable switch panel (4) accommodated in a component (19), wherein the component (19) is formed as a plug-type connector on the plate-shaped component (17).

10. Use of the device according to one of the claims 1 to 9 for combined path and torque measurement in actuating drives.

## Revendications

1. Dispositif de mésure commun d'une route et d'un moment d'un couple de deux mouvements mécaniques qui sont indépendants l'un de l'autre, en particulier mouvements de rotation, comprenant
un panneau de commande (4) adressable, des commutateurs (15) du panneau de commande étant d'un côté connectés avec des convertisseurs (2) électromécaniques, qui convertent des mouvements mécaniques recevés à au moins deux entrées (1,8) mécaniques en un signal electrique de route et un signal electrique du moment d'un couple, et de l'autre sont connectés par une conduite commune avec une sortie (7) commune, les commutateurs individuels (15) du panneau de commande (4) étant actuable séparément par une entrée d' adresse (5), pour mettre à la disposition le signal de route ou signal du moment d'un couple à la sortie (7) commune .

2. Dispostif selon la revendication 1,
au moins une entrée (1) mécanique étant connecté avec des éléments de transmission (3) internes connectés en série, le mouvement de rotation desquels est transformé respectivement par un convertisseur (2) en un signal électrique et est transféré au panneau de commande (4).

3. Dispositif selon la revendication 1 ou 2,
les convertisseurs (2) électromécaniques étant faits comme Hall senseurs qui coopèrent avec des aimants permanents à un élément rotant.

4. Dispositif selon la revendication 1 ou 2,
les convertisseurs (2) électromécaniques opérant avec des barrieres de lumière respectivement codification optique.

5. Dispositif selon une des revendications précédentes,
le panneau de commande (4) adressable étant pourvu d'une extension (9) pour amener directement un signal électrique à un commutateur (15") adressable.

6. Dispositif selon la revendication 5,
un potentiomètre-trimmer (21) étant prévu pour amener un signal électrique au panneau de commande (4) adressable.

7. Dispositif selon une des revendications,
un magasin digital (10) non volatil étant prévu pour enregistrer des valeurs marginales et des choses semblables.

8. Dispositif selon une des revendications précédentes,
le panneau de commande (4) étant fait comme un multiplexeur.

9. Dispositif selon les revendications précédentes, sur un élément de construction (17) de la forme d'un panneau des roues dentées d'entrées (1,8) sont déposées rotablement, qui sont connectables avec des arbres (13,16) et sont en engagement avec des réducteurs de vitesse (3), au roues dentées desquels sont montées des convertisseurs (2) électromécaniques qui transferent des signaux électriques à un panneau de commande (4) qui est placé dans un élément de construction (19), l' élément de construction (19) étant fait comme une connexion à ficher sur 1 élément de construction (17) formé comme un panneau.

10. Usage du dispositif selon une des revendications 1 à 9 pour le mesurement combiné de route et du moment d'un couple aux commandes .
